# FASCICULE DE BREVET EUROPEEN

(11) **EP 3 898 174 B1**
(45) Date de publication et mention de la délivrance du brevet: **25.01.2023**
(21) Numéro de dépôt: 19845599.0
(22) Date de dépôt: 17.12.2019
(51) Int. Cl.: B29C 49/42, B29C 49/78, B29C 49/06

(54) **LIGNE DE PRODUCTION DE RECIPIENTS CONTROLEE PAR UN DISPOSITIF DE DETERMINATION DE POSITION**
DURCH EINE POSITIONSBESTIMMUNGSVORRICHTUNG GESTEUERTE PRODUKTIONSLINIE ZUR HERSTELLUNG VON BEHÄLTERN
PRODUCTION LINE FOR PRODUCING CONTAINERS CONTROLLED BY A POSITION DETERMINING DEVICE

(30) Priorité: 19.12.2018 FR 1873277
(43) Date de publication de la demande: 27.10.2021
(73) Titulaire: Sidel Participations, 76930 Octeville-sur-Mer (FR)
(72) Inventeur: GARIOU, David, 76930 Octeville-Sur-Mer (FR); MOULIN, Sébastien, 76930 Octeville-Sur-Mer (FR)
(74) Mandataire: Sidel Group
(86) Numéro de dépôt international: PCT/FR2019/053115
(87) Numéro de publication internationale: WO 2020/128297

(56) Documents cités:
- EP-A1- 2 735 538
- DE-A1-102010 036 028
- US-A1- 2018 346 307
- US-B1- 6 264 457

## Description

La présente invention concerne une ligne de production de récipients par soufflage ou étirage soufflage de préformes. De telles lignes de production de récipients sont décrites dans les documents US2018/346307A1 et EP2735538A1.

Dans une telle ligne de production, des préformes fournies en continu à la ligne de production dans laquelle elles passent successivement par une pluralité d'unités fonctionnelles interagissant avec les préformes pour chauffer les préformes, déformer celles-ci pour en faire des récipients, marquer les récipients, remplir les récipients, etc. Pour assurer une production continue de récipients, les unités de traitement coopèrent avec un dispositif de transport transportant les préformes et/ou de récipients selon un mouvement périodique. C'est-à-dire qu'une fois qu'une unité fonctionnelle a interagi avec une préforme ou un récipient, une nouvelle préforme ou un nouveau récipient lui est fourni par le dispositif de transport pour une nouvelle interaction. Le fonctionnement des différentes unités fonctionnelles est donc synchronisé avec le mouvement du dispositif de transport. De façon connue, le dispositif de transport est par exemple formé par une succession de roues mobiles en rotation portant des unités fonctionnelles ou passant en regard d'unités fonctionnelles, les interactions avec les préformes ou les récipients se faisant alors que ceux-ci se déplacent en rotation avec les roues successives. En variante et également de façon connue, le mouvement périodique est un mouvement linéaire.

Afin de permettre la synchronisation du fonctionnement des unités fonctionnelles avec le dispositif de transport et ainsi assurer un bon positionnement des préformes ou des récipients par rapport aux différentes unités fonctionnelles, il est prévu d'utiliser un signal représentatif de la position instantanée d'un élément de transport du dispositif de transport comme signal de commande pilotant le dispositif de transport et déclenchant l'interaction d'une unité fonctionnelle avec une préforme ou un récipient. Ainsi, à titre d'exemple, une unité de marquage déclenche le marquage d'un récipient à la réception du signal représentatif de la position instantanée d'un élément de transport, cette position instantanée correspondant à la présence d'un récipient en regard de la tête de marquage de l'unité de marquage. L'élément de transport est par exemple l'une des roues du dispositif de transport.

La ligne de production comprend donc un dispositif de détermination de la position instantanée de l'élément de transport du dispositif de transport au cours d'une période du mouvement périodique utilisé pour piloter les unités fonctionnelles d'un même type, par exemple pour piloter les unités de marquage. Un tel dispositif de détermination est par exemple un codeur déterminant la position angulaire instantanée d'une roue du dispositif de transport, dans le cas d'un mouvement périodique circulaire. Cependant, le signal émis par le codeur doit être compatible avec le type d'unité fonctionnelle que le codeur doit piloter. En effet, chaque type d'unité fonctionnelle est commandé par un signal d'entrée qui présente des caractéristiques différentes d'un type d'unité fonctionnelle à un autre. Par exemple, le type de signal, peut être un signal incrémental de forme particulière, l'amplitude du signal et/ou la résolution du signal peuvent varier d'un type d'unité fonctionnelle à un autre. En d'autres termes, un signal de sortie unique fourni par le codeur ne peut pas être utilisé pour piloter le dispositif de transport et toutes les unités fonctionnelles de la ligne de production.

Ainsi, il est prévu d'utiliser plusieurs codeurs pour piloter le dispositif de transport et les différents types d'unités fonctionnelles de la ligne de production, chaque type d'unité fonctionnelle étant piloté par un codeur dédié. Cela pose cependant des problèmes d'encombrement puisque le nombre de codeurs est important et que chacun occupe un espace non négligeable et des problèmes de coûts. Par exemple, dans le cas d'un codeur déterminant la position angulaire d'une roue, le codeur est associé à un arbre entraînant la roue en rotation et la place disponible est limitée, ce qui empêche la multiplication de codeurs associés à cet arbre.

L'un des buts de l'invention est de pallier ces inconvénients en proposant une ligne de production permettant de piloter le dispositif de transport et les différentes unités fonctionnelles de façon simplifiée.

A cet effet, l'invention concerne une ligne de production de récipients par soufflage ou étirage soufflage de préformes, la ligne de production comprenant :
- au moins un dispositif de transport de préformes et/ou de récipients mobile selon un mouvement périodique, comprenant au moins un élément de transport apte à transporter une série de préformes et/ou de récipients,
- au moins un dispositif de détermination de la position instantanée de l'élément de transport dudit dispositif de transport au cours d'une période dudit mouvement périodique, ledit dispositif de détermination générant un signal de sortie (Sₛ) représentatif de ladite position instantanée,

- au moins un dispositif de commande du dispositif de transport commandant ledit mouvement périodique par un signal de commande (S_{c}) en fonction dudit signal de sortie (Sₛ),
- au moins une unité fonctionnelle interagissant avec au moins une préforme et/ou au moins un récipient transporté dans le dispositif de transport à la réception d'un signal d'entrée (Sₑ), ligne de production dans laquelle le signal d'entrée (Se) de l'unité fonctionnelle est obtenu à partir du signal de sortie (Ss) du dispositif de détermination de position.

Ainsi, un seul dispositif de détermination est utilisé pour le dispositif de transport et pour au moins une unité fonctionnelle en transformant le signal de sortie du dispositif de détermination pour le rendre compatible avec l'unité fonctionnelle à piloter. L'encombrement est ainsi réduit puisqu'il n'est pas nécessaire de multiplier les dispositifs de détermination et la connectique associée. Il est entendu que le signal de sortie du dispositif de détermination peut être transformé pour qu'il soit compatible avec plusieurs types d'unités fonctionnelles différents. En d'autres termes, l'invention permet de piloter une pluralité de types d'unités fonctionnelles différents au moyen d'un dispositif de détermination unique, ce qui permet de libérer un espace important dans la ligne de production et simplifie son aménagement.

Selon une autre caractéristique de la ligne de production selon un mode de réalisation de l'invention, comprend un dispositif de traitement recevant le signal de sortie (Sₛ) et convertissant ledit signal de sortie (Sₛ) en ledit signal d'entrée (Sₑ) pour l'unité fonctionnelle.

Ainsi, le dispositif de traitement permet « d'émuler » le signal de sortie du dispositif de détermination pour le rendre compatible avec l'unité fonctionnelle à piloter, ce qui permet d'avoir des unités fonctionnelles pilotées par un dispositif de détermination alors que les signaux d'entrée de ces unités fonctionnelles présentent caractéristiques différentes.

Selon une autre caractéristique de la ligne de production selon un mode de réalisation de l'invention, le dispositif de traitement transforme le signal de sortie (Sₛ) en un signal numérique (Sₙ) apte à être converti au moins en ledit signal de commande (S_{c}) de l'élément de transport et en ledit signal d'entrée (Sₑ) de l'unité fonctionnelle.

En transformant le signal de sortie en signal numérique avant de le convertir en signal adapté pour l'unité fonctionnelle, on obtient un signal numérique qui peut être transformé en tout type de signal et ainsi être utilisé pour piloter différents types d'unités fonctionnelles dont les signaux d'entrée présentent des caractéristiques différentes. Autrement dit, la conversion du signal de sortie représentatif de la position instantanée de l'élément de transport en un signal d'entrée pour une unité fonctionnelle se fait par un traitement logiciel, et non pas par un simple traitement électronique à partir de composant physique assurant de fonction analogique de filtrage, d'écrêtage, amplification...etc. Le fait de passer par un traitement logiciel du signal de sortie ouvre une large palette de conversions possibles.

Par exemple, il est alors possible d'introduire un déphasage d'un point de référence du signal d'entrée généré par rapport au point de référence du signal de sortie récupéré.

De manière alternative, il est possible de multiplier (respectivement de diviser) les points de référencement du signal d'entrée généré par rapport au nombre de points de référencement du signal de sortie récupéré. Cela permet par exemple, à partir d'un signal de sortie s'étendant sur une période de l'élément de transport, tel qu'un tour de roue, de générer un signal d'entrée utilisé par un autre élément de transport faisant N tours (respectivement 1/N tours) dans la même période de temps. Autre exemple, cela permet à partir d'un signal de sortie s'étendant sur une période de l'élément de transport, tel qu'un tour de roue, de générer un signal d'entrée utilisé sur le même élément de transport, ou sur un autre élément de transport faisant également un tour durant la période de temps, mais où l'unité fonctionnelle est déclenchée N fois (respectivement 1/N fois) au cours de cette période de temps.

Un autre avantage d'une conversion logicielle peut être de générer plusieurs signaux d'entrée correspondant chacun à une unité fonctionnelle. Chacune des unités fonctionnelles peut alors être pilotée par un signal d'entrée qui lui est propre, tout en étant issue d'une conversion du même signal de sortie. Cela est en particulier utile pour les installations industrielles où des articles se succèdent le long d'un chemin de transport. La ligne de production comprend une pluralité d'unités fonctionnelles. Chaque unité fonctionnelle opère un traitement ou une action sur les articles qui défilent le long du chemin. Chacun des traitements est périodique, mais selon une période et une phase propre. La conversion logicielle permet de déclencher l'action de chacune des unités fonctionnelles, après avoir adapté la période et la phase du signal de sortie en une pluralité de signaux d'entrée correspondants à chaque unité fonctionnelles, par exemple en ayant adapté spécifiquement une phase ou une fréquence propre à telle unité fonctionnelle.

Encore un autre avantage de la conversion logicielle est de permettre de pouvoir régler par exemple une durée de maintien d'un créneau d'une voie Z du signal d'entrée, le créneau indiquant par exemple un instant ou une position de référence.

Selon d'autres caractéristiques de la ligne de production selon l'invention, prises isolément ou selon toute combinaison techniquement envisageable :
- la conversion du signal de sortie (Ss) en ledit signal d'entrée (Se) par le dispositif de traitement comprend le choix d'un type de signal d'entrée, le choix d'une amplitude de signal d'entrée et/ou le choix de la résolution du signal d'entrée.
- l'élément de transport du dispositif de transport est formé par une roue mobile en rotation et comprenant une pluralité d'éléments de préhension de préforme ou de récipient mobiles avec la roue selon un trajet circulaire, le dispositif de détermination étant agencé pour déterminer la position instantanée desdits éléments de préhension sur ledit trajet circulaire.
- le dispositif de détermination de la position instantanée est un codeur associé à un arbre de rotation entraînant la roue en rotation.
- l'élément de transport est mobile selon un mouvement périodique linéaire.
- le dispositif de transport comprend au moins un élément de transport supplémentaire comprenant une pluralité d'éléments de préhension de préforme ou de récipient, l'unité fonctionnelle interagissant avec au moins une préforme et/ou au moins un récipient porté par un élément de préhension dudit élément de transport supplémentaire.

On notera que l'invention utilise la position instantanée d'un élément de transport sans que l'unité fonctionnelle soit nécessairement associée à cet élément de transport. En d'autres termes, l'unité fonctionnelle peut être située à un endroit déporté de la ligne de production par rapport à l'élément de transport dont la position instantanée est déterminée par le dispositif de détermination.

Selon d'autres caractéristiques de la ligne de production selon l'invention, prises isolément ou selon toute combinaison techniquement envisageable :
- l'unité fonctionnelle interagit avec au moins une préforme et/ou au moins un récipient porté par un élément de préhension de l'élément de transport dont la position instantanée est déterminée par le dispositif de détermination.
- l'unité fonctionnelle est une unité de marquage ou d'étiquetage d'un récipient agencée pour appliquer un marquage ou une étiquette à un récipient à la réception du signal d'entrée (Se).
- l'unité fonctionnelle est une unité de contrôle d'un récipient agencée pour acquérir au moins un paramètre relatif au récipient à la réception du signal d'entrée (Se).

Selon un autre aspect, l'invention concerne une ligne de production de récipients par soufflage ou étirage soufflage de préformes, la ligne de production comprenant :
- au moins un dispositif de transport de préformes et/ou de récipients mobile selon un mouvement périodique, comprenant au moins un élément de transport apte à transporter une série de préformes et/ou de récipients,
- au moins un dispositif de détermination de la position instantanée de l'élément de transport dudit dispositif de transport au cours d'une période dudit mouvement périodique, ledit dispositif de détermination générant un signal de sortie (Sₛ) représentatif de ladite position instantanée,
- au moins un dispositif de commande du dispositif de transport commandant ledit mouvement périodique par un signal de commande (S_{c}) en fonction dudit signal de sortie (Sₛ),
- au moins une unité fonctionnelle interagissant avec au moins une préforme et/ou au moins un récipient transporté dans le dispositif de transport à la réception d'un signal d'entrée (Sₑ),
ligne de production dans laquelle le signal d'entrée (Se) de l'unité fonctionnelle est obtenu à partir du signal de sortie (Ss) du dispositif de détermination de position et un point de référence du signal d'entrée présente un déphasage par rapport au point de référence correspondant dans le signal de sortie.

Selon un autre aspect, l'invention concerne une ligne de production de récipients par soufflage ou étirage soufflage de préformes, la ligne de production comprenant :
- au moins un dispositif de transport de préformes et/ou de récipients mobile selon un mouvement périodique, comprenant au moins un élément de transport apte à transporter une série de préformes et/ou de récipients,
- au moins un dispositif de détermination de la position instantanée de l'élément de transport dudit dispositif de transport au cours d'une période dudit mouvement périodique, ledit dispositif de détermination générant un signal de sortie (Sₛ) représentatif de ladite position instantanée et présentant un nombre de point de référencement répartis au cours de la période,
- au moins un dispositif de commande du dispositif de transport commandant ledit mouvement périodique par un signal de commande (S_{c}) en fonction dudit signal de sortie (Sₛ),
- au moins une unité fonctionnelle interagissant avec au moins une préforme et/ou au moins un récipient transporté dans le dispositif de transport à la réception d'un signal d'entrée (Sₑ),
ligne de production dans laquelle le signal d'entrée (Se) de l'unité fonctionnelle est obtenu à partir du signal de sortie (Ss) du dispositif de détermination de position et le signal d'entrée présente un nombre de points de référencement qui est un multiple entier ou une fraction du nombre points de référencement du signal de sortie.

Avantageusement le nombre de points de référencement du signal d'entrée et le nombre de points de référencement du signal de sortie sont dans un rapport de 2ⁿ.

L'invention sera mieux comprise à la lecture de la description qui suit, donnée à titre d'exemple et faite en référence aux dessins annexés, dans lesquels :
- [Fig. 1] est une représentation schématique vue du dessus d'une ligne de production selon un mode de réalisation de l'invention, et
- [Fig. 2] est une représentation schématique de la transformation d'un signal de sortie en signaux d'entrée compatibles avec différents types d'unités fonctionnelles.

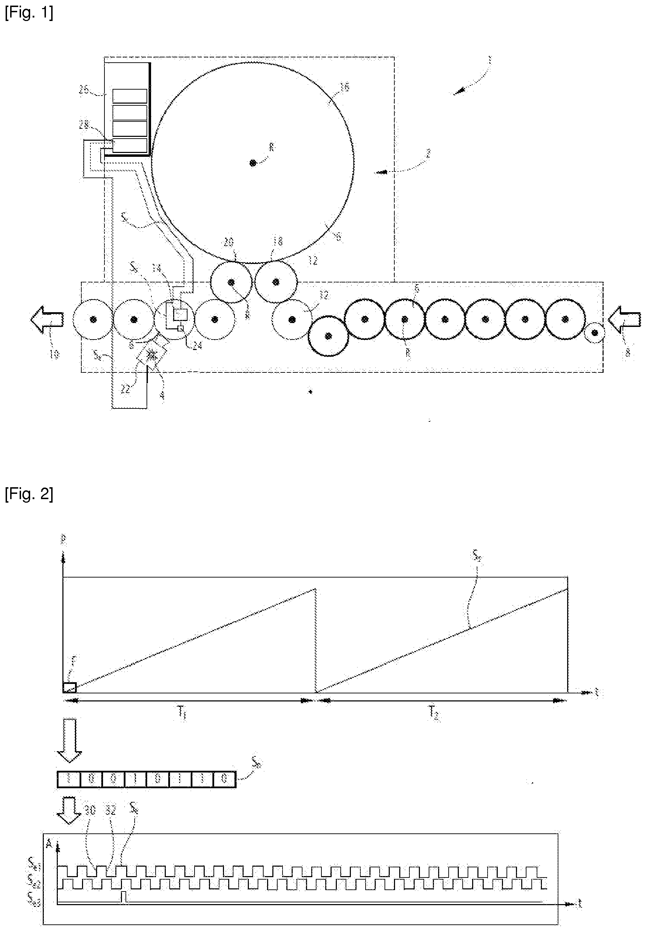

En référence à la figure 1, on décrit une ligne de production **1** de récipients par soufflage ou étirage soufflage de préformes. Une telle ligne de production 1 est connue en soit et permet de former des récipients en continu en injectant de l'air comprimé dans des préformes chauffées circulant dans la ligne de production 1.

Une telle ligne de production 1 comprend un dispositif de transport **2** des préformes et récipients dans la ligne de production et différentes unités fonctionnelles **4** agencées pour réaliser les différentes opérations permettant de former des récipients à partir de préformes transportées par le dispositif de transport 2.

Le dispositif de transport 2 comprend au moins un élément de transport **6** comprenant une pluralité d'éléments de préhension d'une préforme ou d'un récipient et agencé pour déplacer ces éléments de préhension selon un trajet prédéfini en un mouvement périodique. En d'autres termes, au cours d'un cycle, chaque élément de préhension est déplacé selon le trajet prédéfini par l'élément de transport 6, revient à son point de départ à l'issu de ce trajet et est à nouveau déplacé selon le trajet prédéfini au cours d'un cycle suivant. Selon un mode de réalisation, le dispositif de transport 2 comprend plusieurs éléments de transport 6 successifs, les préformes puis les récipients passant d'un élément de préhension d'un élément de transport 6 à un élément de préhension d'un autre élément de transport 6 et subissant différents traitements au cours de ce cheminement, comme cela sera décrit ultérieurement. Les préformes sont fournies en continu en un point d'entrée 8 de la ligne de production 1, sont transportées dans la ligne de production par les éléments de transport 6 successifs et des récipients sont obtenus en continu en un point de sortie 10 de la ligne de production 1.

Selon le mode de réalisation représenté sur la figure 1, l'élément de transport 6 est formé par une roue **12,** mobile en rotation autour d'un axe de rotation R, de sorte que le trajet suivi par les éléments de préhension de la roue est circulaire et correspond à la périphérie de la roue 12. Un cycle du mouvement périodique de l'élément de transport 6 correspond ainsi dans ce mode de réalisation à un tour de la roue 12 formant cet élément de transport. Une telle roue 12 est également connue sous le nom de carrousel.

Lorsque le dispositif de transport 2 comprend plusieurs roues 12, les préformes et récipients passent d'une roue 12 à une autre, le mouvement des roues étant synchronisé pour qu'une préforme (ou récipient) transportée par un élément de préhension d'une première roue 12 soit récupérée par un élément de préhension d'une deuxième roue 12 adjacente lorsque cette préforme (ou récipient) atteint un point particulier, dit point de sortie, du trajet circulaire de la première roue 12. Il est entendu que le dispositif de transport 2 peut également comprendre d'autres types d'éléments de transport 6, tels que des convoyeurs linéaires, comme cela sera décrit ultérieurement. Il est également entendu qu'un dispositif de transport peut comprendre plusieurs types d'éléments de transport 6 combinés entre eux, tels que des convoyeurs et des roues, comme cela décrit ultérieurement. De tels éléments de transport 6 sont connus en soi et ne seront pas décrit plus en détail ici.

Le déplacement du dispositif de transport 2 se fait par au moins un moteur **14** entraînant directement ou indirectement l'élément de transport 6 selon son mouvement périodique. Dans le cas d'un élément de transport 6 formé par une roue 12, le moteur 14 entraine ainsi l'élément de transport 6 en rotation autour de son axe R, par exemple en entraînant directement un arbre s'étendant selon l'axe de rotation R ou en étant lié, par l'intermédiaire d'au moins un pignon ou d'une courroie, à cet arbre dans le cas d'un entraînement indirect. Lorsque le dispositif de transport 12 comprend plusieurs éléments de transport 6, ceux-ci peuvent être chacun entraînés par un moteur 14 dédié. En variante, un moteur 14 entraîne plusieurs éléments de transport 6, ceux-ci étant liés en mouvement par des pignons et/ou des courroies par exemple. Ainsi, un dispositif de transport 2 dans son ensemble peut être entraîné par un nombre limité de moteurs 14.

Au moins certains des éléments de transport 6 du dispositif de transport 2 sont associés avec une ou plusieurs unités fonctionnelles 4. Par unité fonctionnelle, on entend une unité interagissant avec les préformes ou les récipients portés par les éléments de préhension de l'élément de transport 6 auquel l'unité fonctionnelle est associée. Par interaction, on entend tout type d'interaction avec une préforme ou un récipient, qu'il s'agisse d'un traitement appliqué à une préforme ou à un récipient ou d'une opération de contrôle, par exemple de la qualité, d'une préforme ou d'un récipient.

Selon différents types d'unité fonctionnelle 4, celle-ci peut être portée par l'élément de transport 6 de sorte à se déplacer avec l'élément de transport 6 et à appliquer un traitement sur une préforme ou un récipient pendant que ceux-ci sont transportés par l'élément de transport 6. Dans ce cas, le traitement est appliqué pendant un cycle du mouvement périodique de sorte que la préforme ou le récipient subissent le traitement après avoir été récupérés par un élément de préhension de l'élément de transport 6, pendant qu'ils se déplacent selon le trajet prédéfini de l'élément de transport 6 et avant de sortir de l'élément de transport 6. De telles unités fonctionnelles 4 sont par exemple une unité de formage, dans laquelle une préforme est formée en un récipient par soufflage ou étirage/soufflage, une remplisseuse, dans laquelle un produit est introduit dans un récipient, une unité de traitement pour le dépôt par plasma d'une couche barrière sur la paroi interne de récipients, dans laquelle une barrière est appliquée contre la paroi interne d'un récipient, etc. De telles unités fonctionnelles 4 sont connues en soi et ne seront pas décrites plus en détail ici. Typiquement, sur l'installation représentée sur la figure 1, la roue de plus grand diamètre, ou grande roue **16,** porte une pluralité d'unités de formage (non représentées). Chacune de ces unités comprend un moule, formant l'élément de préhension d'une préforme, et des moyens de soufflage ou d'étirage soufflage. Chaque préforme est accueillie dans un moule lorsqu'elle atteint un point d'entrée **18** de la grande roue 16, puis est soufflée ou étirée et soufflée pendant qu'elle circule selon le trajet circulaire correspondant au périmètre de la grande roue 16 de sorte à se déformer et à épouser la forme de la cavité de moulage et un récipient sort de la grande roue 16 en un point de sortie **20.**

Selon d'autres types d'unité fonctionnelle 4, celle-ci s'étend en regard de l'élément de transport 6 et interagit avec les préformes ou récipients transportés par l'élément de transport 6 et passant en regard de l'unité fonctionnelle 4. En d'autres termes, l'unité fonctionnelle 4 ne se déplace pas avec l'élément de transport 6 et est agencée pour interagir avec une préforme ou un récipient, lorsque ceux-ci passent en un point ou une zone particulière du trajet prédéfini de l'élément de transport, l'unité fonctionnelle 4 s'étendant en regard de ce point ou de cette zone. De telles unités fonctionnelles 4 sont par exemple une unité de chauffage, agencée pour émettre un rayonnement chauffant une préforme passant en regard de l'unité de chauffage, une unité de marquage, agencée pour appliquer un marquage sur une préforme ou un récipient, une unité d'étiquetage, ou étiqueteuse, agencée pour appliquer une étiquette sur un récipient, une unité de contrôle d'une préforme ou d'un récipient, agencée pour acquérir au moins un paramètre relatif au récipient ou à la préforme, par exemple pour contrôler la qualité d'une préforme ou d'un récipient. De telles unités fonctionnelles 4 sont connues en soi et ne seront pas décrites plus en détail ici. A titre d'exemple, on a représenté sur la figure 1, une unité de contrôle **22** sous la forme d'une caméra, agencée pour acquérir une image d'un récipient passant en regard de l'unité de contrôle 22 afin d'en contrôler la qualité. Une telle unité de contrôle 22 est agencée en aval de la grande roue 16 de sorte que les récipients formés sur la grande roue 16 passent ensuite devant l'unité de contrôle 22, comme représenté sur la figure 1.

Il est entendu qu'en fonction du type de récipient que l'on souhaite réaliser, une ligne de production 1 peut comprendre un ou plusieurs types d'unités fonctionnelles 4, portées et/ou non portées par les éléments de transport 6. Selon un mode de réalisation, la ligne de production 1 comprend au moins deux unités de traitement 4 différentes, c'est-à-dire deux unités de traitement 4 interagissant de façon différente avec les préformes ou récipients circulant dans la ligne de production.

Pour piloter et synchroniser le déplacement de ou des éléments de transport 6 et le fonctionnement de la ou des unités fonctionnelles 4, la ligne de production 1 comprend au moins un dispositif de détermination **24** de la position instantanée du ou de l'un des éléments de transport 6 de la ligne de production 1. Un tel dispositif de détermination 24 permet de connaître à tout instant la position de l'élément de transport 6 auquel il est associé au cours de son mouvement périodique. En d'autres termes, le dispositif de détermination 24 permet de déterminer la position à un instant donné de chacun des éléments de préhension portés par l'élément de transport 6 sur le trajet prédéfini de l'élément de transport 6. Le dispositif de détermination 24 est par exemple agencé pour déterminer la position instantanée de l'arbre de sortie de l'un des moteurs 14 ou d'un élément entraîné directement ou indirectement par l'un de ces moteurs 14. A titre d'exemple, le dispositif de détermination 24 peut être agencé pour déterminer la position d'un pignon interposé entre un moteur 14 et un élément de transport 6 ou celle d'un élément de transport 6. Par conséquent, on comprend que « dispositif de détermination de la position instantanée de l'élément de transport » signifie que la position de l'élément de transport peut être déterminée directement par le dispositif de détermination ou peut être déduite en déterminant la position d'un autre élément dont le déplacement est synchronisé avec celui de l'élément de transport. Ainsi, le dispositif de détermination 24 peut être prévu en différents emplacement de la ligne de production 1 en fonction de l'espace disponible dans la ligne de production 1.

Dans le cas d'un élément de transport 6 formé par une roue 12, le dispositif de détermination 24 est un capteur de la position angulaire d'un élément mobile en rotation, par exemple l'arbre de sortie du moteur 14, un pignon mobile en rotation autour d'un axe de rotation parallèle à l'axe de rotation R de la roue 12 ou directement de l'arbre d'entraînement de la roue 12 mobile en rotation autour de l'axe de rotation R de la roue.

Le dispositif de détermination 24, également appelé codeur, est agencé pour émettre un signal de sortie Sₛ représentatif de la position instantanée déterminée. Ce signal Sₛ est un signal électrique, dont un exemple est représenté sur le graphique du haut de la figure 2, dans lequel le temps t est représenté en abscisse et la position déterminée P est représentée en ordonnée. Sur cette figure, deux cycles du mouvement périodique de l'élément de transport 6 est représenté. Ainsi, au cours d'un premier cycle T₁, la valeur P augmente progressivement, puis retombe à 0 à la fin du premier cycle lorsque l'élément de transport retourne à sa position initiale puis la valeur P augmente à nouveau progressivement au cours d'un deuxième cycle T₂. Il est entendu que cette forme de signal Sₛ se répète à chaque cycle du mouvement périodique. Dans le cas d'une roue 2, la valeur P est par exemple un angle variant de 0° à 360° par rapport àun repère représentatif de la position initiale de la roue 2. Dans le cas d'un élément de transport 6 se déplaçant selon un mouvement linéaire, la valeur P est par exemple une distance augmentant par rapport à une position initiale de l'élément de transport 6 en début de cycle.

Le signal de sortie Sₛ présente plusieurs caractéristiques, telles que son type, ici un signal physique, sa forme, comme décrit ci-dessus, sa résolution, correspondant au nombre de mesures effectuées par le dispositif de détermination 24 pendant un cycle du mouvement périodique. La résolution correspond ainsi à une subdivision de période du signal.

Le signal de sortie Sₛ du dispositif de détermination 24 est transmis à un dispositif de commande **26,** ou variateur, dans lequel le signal de sortie Sₛ est exploité, comme cela va à présent être décrit.

Comme représenté sur la figure 1, le dispositif de commande 26 est relié au moteur 14 de sorte à commander celui-ci à partir du signal de sortie Sₛ obtenu du dispositif de détermination 24. En d'autres termes, le signal de sortie Sₛ est utilisé pour commander le moteur 14 afin de commander le mouvement périodique de l'élément de transport 6. C'est-à-dire que le mouvement de l'élément de transport 6 est asservi à sa position. Cela permet d'accélérer ou de ralentir le mouvement périodique de l'élément de transport 6 en fonction de sa position, par exemple pour assurer une bonne synchronisation de l'élément de transport 6 avec un autre élément de transport 6 et ainsi assurer une bonne circulation des préformes et des récipients dans la ligne de production 1. Ainsi, le dispositif de commande 26 transmet un signal de commande S_{c} au moteur 14, le signal S_{c} étant élaboré à partir du signal de sortie Sₛ, comme cela sera décrit ultérieurement. Il est entendu que le signal Ss peut être utilisé, le cas échéant, pour piloter le moteur d'un autre élément de transport 6 de la ligne de production 1. En variante, un autre dispositif de détermination 24 est utilisé en relation avec l'autre élément de transport 6, le mouvement de celui-ci étant commandé à partir du signal de sortie de cet autre dispositif de détermination 24, en passant par le même dispositif de commande 26 de sorte que les différents signaux de commande des moteurs sont adaptés les uns aux autres pour assurer une bonne synchronisation entre les éléments de transport 6.

Le signal de sortie Sₛ est en outre utilisé pour commander au moins une unité fonctionnelle 4 de la ligne de production comme cela va à présent être décrit.

L'unité fonctionnelle 4 est commandée par un signal électrique d'entrée Sₑ, c'est-à-dire que l'unité fonctionnelle 4 est agencée pour interagir avec une préforme ou un récipient à la réception du signal d'entrée Sₑ. Ainsi, dans le cas d'une unité de marquage ou d'étiquetage, l'unité applique le marquage ou l'étiquette sur un récipient lorsqu'elle reçoit le signal d'entrée Sₑ. Il convient donc que ce signal soit reçu lorsqu'un et à chaque fois qu'un récipient se trouve en regard de l'unité fonctionnelle, ce qui dépend de la position de l'élément de transport 6. Il convient donc de convertir le signal de sortie Sₛ en signal d'entrée Sₑ apte à déclencher l'unité fonctionnelle 4 à chaque fois qu'elle doit interagir avec une préforme ou un récipient. En effet, les caractéristiques du signal de sortie Sₛ ne sont en général pas exploitables en tant que telles comme signal d'entrée Sₑ de l'unité fonctionnelle 4, ce signal d'entrée Sₑ présentant des caractéristiques différentes de celles du signal de sortie Sₛ.

Pour convertir le signal de sortie Sₛ, la ligne de production comprend par exemple un dispositif de traitement **28** agencé pour recevoir le signal de sortie Sₛ du dispositif de détermination 24 et émettre un signal d'entrée Sₑ vers l'unité fonctionnelle 4. Le dispositif de traitement 28 est par exemple intégré dans le dispositif de commande 26, comme représenté sur la figure 1. Le dispositif de traitement 28 est agencé pour traiter le signal de sortie Sₛ et pour le convertir en un signal d'entrée Sₑ compatible avec l'unité fonctionnelle 4 qui doit être commandée.

La conversion du signal de sortie Sₛ en signal d'entrée Sₑ comprend notamment le choix d'un type de signal d'entrée, le choix d'une amplitude de signal d'entrée et/ou le choix de la résolution du signal d'entrée.

Le type de signal d'entrée correspond à la nature du signal d'entrée, typiquement un signal incrémental, dont la forme doit être adaptée à l'unité fonctionnelle 4. Ainsi, comme représenté sur le graphique du bas de la figure 2, le signal de sortie Sₛ, de forme triangulaire, est transformé en un signal d'entrée Sₑ incrémental de forme carrée, comprenant des fronts montant **30** et des fronts descendant **32.** Sur le graphique du bas de la figure 2, le temps t est représenté en abscisse et l'amplitude du signal A est représenté en ordonnée. Sur le graphique du bas, seule une petite portion du premier cycle T1 a été représentée, cette portion correspondant à la fenêtre F représentée sur le graphique du haut de la figure 2.

L'amplitude du signal se doit être adaptée à l'unité fonctionnelle 4 commandée. Typiquement, l'amplitude sera choisie entre une amplitude de 5 V ou de 24 V en fonction de l'unité fonctionnelle 4 commandée.

La résolution du signal d'entrée Sₑ correspond à une subdivision de la période du signal au cours de laquelle l'unité fonctionnelle est apte à exécuter l'interaction avec une préforme ou un récipient. En effet, l'unité fonctionnelle 4 peut être actionnée un certain nombre de fois au cours d'un cycle de l'élément de transport 6 et ce nombre ne correspond pas nécessairement au nombre de mesures effectuées par le dispositif de détermination 28 au cours de ce cycle. Il convient alors de modifier la résolution du signal de sortie Sₛ pour l'adapter à celle de l'unité fonctionnelle 4.

Ainsi, le dispositif de traitement 28 est apte à transformer le signal de sortie Ss en un signal d'entrée Se apte à commander l'unité fonctionnelle 4. A titre d'exemple, si l'on considère le signal d'entrée Se représenté sur le graphique du bas de la figure 2, chaque front montant 30 correspond à un déclenchement de l'unité fonctionnelle 4 pour qu'elle interagisse avec une préforme ou un récipient, le front montant 30 correspondant à une position de l'élément de transport 6 dans laquelle une préforme ou un récipient se trouve en regard de l'unité fonctionnelle 4. Le front descendant 32 correspond quant à lui à l'arrêt de l'interaction entre l'unité fonctionnelle 4 et la préforme ou le récipient.

On notera à ce sujet que si, sur le mode de réalisation représenté sur la figure 1, l'unité fonctionnelle 4, à savoir l'unité de contrôle 22, interagit avec un récipient porté par l'élément de transport 6 dont la position instantanée est déterminée par le dispositif de détermination 24, l'invention s'applique également pour la commande d'une unité fonctionnelle 4 qui interagit avec une préforme ou un récipient porté par un élément de transport 6 supplémentaire, différent de l'élément de transport 6 dont la position instantanée est déterminée par le dispositif de détermination 24. Ainsi, à titre d'exemple, le dispositif de détermination 24 pourrait être associé à la roue de formage, ou grande roue 16 sur la figure 1, tandis que l'unité fonctionnelle 4 interagirait avec des préformes ou récipients portés par une roue s'étendant en amont ou en aval de la grande roue 16. En effet, la synchronisation du dispositif de transport 2 est telle qu'il existe un lien direct et facilement déductible entre la position instantanée d'un élément de transport et celle d'un élément de transport supplémentaire. En d'autres termes, la détermination de la position instantanée d'un élément de transport 6 permet également de déterminer la position instantanée d'un élément de transport 6 supplémentaire et donc de commander une unité fonctionnelle 4 associée à cet élément de transport supplémentaire.

Selon un mode de réalisation particulièrement avantageux lorsque le signal de sortie Sₛ est exploité pour commander plusieurs unités fonctionnelles 4 ou lorsqu'il est prévu une ligne de production 1 modulable, dans laquelle l'unité fonctionnelle 4 commandée est susceptible de changer, le dispositif de traitement 24 convertit le signal de sortie Sₛ en un signal numérique Sₙ, ce signal numérique Sₙ étant ensuite converti en signal d'entrée Sₑ. Ainsi, le signal de sortie Ss est converti en un signal numérique binaire, formé d'une succession de 0 et de 1, comme représenté sur la figure 2, ce qui permet d'avoir un signal numérique Sₙ susceptible d'être converti en tout type de signal d'entrée Sₑ et également en signal de commande S_{c}. Ainsi, selon un mode de réalisation, le signal de sortie Ss est d'abord transmis au dispositif de traitement 24, dans lequel il est converti en signal numérique Sₙ, puis le signal numérique Sₙ est converti en au moins un signal de commande S_{c}, transmis à l'élément de transport 6, et en au moins un signal d'entrée Sₑ, transmis à une unité fonctionnelle 4. Selon le mode de réalisation représenté sur la figure 2, le signal numérique Sn est converti en trois signaux d'entrée Sₑ₁, Sₑ₂ et Sₑ₃ commandant autant d'unités fonctionnelles 4 et présentant des caractéristiques différentes.

Ainsi, une signal de sortie Ss unique peut être utilisé pour commander plusieurs éléments de transport 6 et/ou plusieurs unités fonctionnelle 4.

La ligne de production 1 décrite ci-dessus permet ainsi, à partir d'un unique dispositif de détermination 24 de commander à la fois un ou plusieurs éléments de transport 6 et une ou plusieurs unités fonctionnelles 4, ce qui permet de se passer de dispositifs de détermination 24 dédiés à chacune des unités fonctionnelles 4 de la ligne de production 1, en « émulant » les signaux d'entrée des unités fonctionnelles à partir du signal de sortie Sₛ. La ligne de production est ainsi moins coûteuse et les contraintes d'espace requis sont réduites.

## Revendications

1. Ligne de production (1) de récipients par soufflage ou étirage soufflage de préformes, la ligne de production comprenant :
- au moins un dispositif de transport (2) de préformes et/ou de récipients mobile selon un mouvement périodique, comprenant au moins un élément de transport (6) apte à transporter une série de préformes et/ou de récipients,
- au moins un dispositif de détermination (24) de la position instantanée de l'élément de transport (6) dudit dispositif de transport (2) au cours d'une période dudit mouvement périodique, ledit dispositif de détermination (24) générant un signal de sortie (Sₛ) représentatif de ladite position instantanée,
- au moins un dispositif de commande (26) du dispositif de transport (2) commandant ledit mouvement périodique par un signal de commande (S_{c}) en fonction dudit signal de sortie (Sₛ),
- au moins une unité fonctionnelle (4) interagissant avec au moins une préforme et/ou au moins un récipient transporté dans le dispositif de transport (2) à la réception d'un signal d'entrée (Sₑ),
**caractérisé en ce que** le signal d'entrée (Sₑ) de l'unité fonctionnelle (4) est obtenu à partir du signal de sortie (Sₛ) du dispositif de détermination (24) de position.

2. Ligne de production selon la revendication 1, comprenant un dispositif de traitement (28) recevant le signal de sortie (Sₛ) et convertissant ledit signal de sortie (Sₛ) en ledit signal d'entrée (Sₑ) pour l'unité fonctionnelle (4).

3. Ligne de production selon la revendication 2, dans laquelle le dispositif de traitement (24) transforme le signal de sortie (Sₛ) en un signal numérique (Sₙ) apte à être converti au moins en ledit signal de commande (S_{c}) de l'élément de transport (6) et en ledit signal d'entrée (Sₑ) de l'unité fonctionnelle (4).

4. Ligne de production selon la revendication 2 ou 3, dans laquelle la conversion du signal de sortie (Sₛ) en ledit signal d'entrée (Sₑ) par le dispositif de traitement (24) comprend le choix d'un type de signal d'entrée, le choix d'une amplitude de signal d'entrée et/ou le choix de la résolution du signal d'entrée.

5. Ligne de production selon l'une quelconque des revendications 1 à 4, dans laquelle l'élément de transport (6) du dispositif de transport (2) est formé par une roue mobile en rotation et comprenant une pluralité d'éléments de préhension de préforme ou de récipient mobiles avec la roue (16) selon un trajet circulaire, le dispositif de détermination (24) étant agencé pour déterminer la position instantanée desdits éléments de préhension sur ledit trajet circulaire.

6. Ligne de production selon la revendication 5, dans laquelle le dispositif de détermination (24) de la position instantanée est un codeur associé à un arbre de rotation entraînant la roue en rotation.

7. Ligne de production selon l'une quelconque des revendications 1 à 4, dans laquelle l'élément de transport (6) est mobile selon un mouvement périodique linéaire.

8. Ligne de production selon l'une quelconque des revendications 1 à 7, dans laquelle le dispositif de transport (2) comprend au moins un élément de transport (6) supplémentaire comprenant une pluralité d'éléments de préhension de préforme ou de récipient, l'unité fonctionnelle (4) interagissant avec au moins une préforme et/ou au moins un récipient porté par un élément de préhension dudit élément de transport (6) supplémentaire.

9. Ligne de production selon l'une quelconque des revendications 1 à 7, dans laquelle l'unité fonctionnelle (4) interagit avec au moins une préforme et/ou au moins un récipient porté par un élément de préhension de l'élément de transport (6) dont la position instantanée est déterminée par le dispositif de détermination (24).

10. Ligne de production selon l'une quelconque des revendications 1 à 9, dans laquelle l'unité fonctionnelle (4) est une unité de marquage ou d'étiquetage d'un récipient agencée pour appliquer un marquage ou une étiquette à un récipient à la réception du signal d'entrée (Se).

11. Ligne de production selon l'une quelconque des revendications 1 à 9, dans laquelle l'unité fonctionnelle (4) est une unité de contrôle (22) d'un récipient agencée pour acquérir au moins un paramètre relatif au récipient à la réception du signal d'entrée (Se).

## Patentansprüche

1. Produktionslinie (1) zur Herstellung von Behältern durch Blasformen oder Streckblasen von Vorformen, wobei die Produktionslinie umfasst:
- mindestens eine mit einer periodischen Bewegung bewegliche Transportvorrichtung (2) für Vorformen und/oder Behälter, die mindestens ein Transportelement (6) umfasst, das geeignet ist, eine Reihe von Vorformen und/oder von Behältern zu transportieren,
- mindestens eine Vorrichtung zur Bestimmung (24) der momentanen Position des Transportelements (6) der Transportvorrichtung (2) während einer Periode der periodischen Bewegung, wobei die Bestimmungsvorrichtung (24) ein Ausgangssignal (Sₛ) erzeugt, das für die momentane Position repräsentativ ist,
- mindestens eine Vorrichtung zur Steuerung (26) der Transportvorrichtung (2), welche die periodische Bewegung mit einem Steuersignal (S_{c}) in Abhängigkeit von dem Ausgangssignal (Sₛ) steuert,
- mindestens eine Funktionseinheit (4), die mit mindestens einer Vorform und/oder mindestens einem Behälter, die bzw. der in der Transportvorrichtung (2) transportiert wird, beim Empfang eines Eingangssignals (Sₑ) interagiert,
**dadurch gekennzeichnet, dass** das Eingangssignal (Sₑ) der Funktionseinheit (4) aus dem Ausgangssignal (Sₛ) der Positionsbestimmungsvorrichtung (24) gewonnen wird.

2. Produktionslinie nach Anspruch 1, welche eine Verarbeitungsvorrichtung (28) umfasst, die das Ausgangssignal (Sₛ) empfängt und das Ausgangssignal (Sₛ) in das Eingangssignal (Sₑ) der Funktionseinheit (4) umwandelt.

3. Produktionslinie nach Anspruch 2, wobei die Verarbeitungsvorrichtung (24) das Ausgangssignal (Sₛ) in ein digitales Signal (Sₙ) transformiert, das mindestens in das Steuersignal (S_{c}) für das Transportelement (6) und in das Eingangssignal (Sₑ) der Funktionseinheit (4) umwandelbar ist.

4. Produktionslinie nach Anspruch 2 oder 3, wobei die Umwandlung des Ausgangssignals (Sₛ) in das Eingangssignal (Sₑ) durch die Verarbeitungsvorrichtung (24) die Wahl eines Eingangssignaltyps, die Wahl einer Eingangssignalamplitude und/oder die Wahl der Auflösung des Eingangssignals umfasst.

5. Produktionslinie nach einem der Ansprüche 1 bis 4, wobei das Transportelement (6) der Transportvorrichtung (2) von einem Rad gebildet wird, das drehbeweglich ist und mehrere Greifelemente für eine Vorform oder einen Behälter umfasst, die mit dem Rad (16) entlang eines kreisförmigen Weges beweglich sind, wobei die Bestimmungsvorrichtung (24) dazu eingerichtet ist, die momentane Position der Greifelemente auf dem kreisförmigen Weg zu bestimmen.

6. Produktionslinie nach Anspruch 5, wobei die Bestimmungsvorrichtung (24) für die momentane Position ein Kodierer ist, der einer Drehwelle zugeordnet ist, die das Rad drehend antreibt.

7. Produktionslinie nach einem der Ansprüche 1 bis 4, wobei das Transportelement (6) mit einer linearen periodischen Bewegung beweglich ist.

8. Produktionslinie nach einem der Ansprüche 1 bis 7, wobei die Transportvorrichtung (2) mindestens ein zusätzliches Transportelement (6) umfasst, das mehrere Greifelemente für eine Vorform oder einen Behälter umfasst, wobei die Funktionseinheit (4) mit mindestens einer Vorform und/oder mit mindestens einem Behälter interagiert, die bzw. der von einem Greifelement des zusätzlichen Transportelements (6) getragen wird.

9. Produktionslinie nach einem der Ansprüche 1 bis 7, wobei die Funktionseinheit (4) mit mindestens einer Vorform und/oder mit mindestens einem Behälter interagiert, die bzw. der von einem Greifelement des Transportelements (6) getragen wird, dessen momentane Position von der Bestimmungsvorrichtung (24) bestimmt wird.

10. Produktionslinie nach einem der Ansprüche 1 bis 9, wobei die Funktionseinheit (4) eine Einheit zur Markierung oder Etikettierung eines Behälters ist, die dazu eingerichtet ist, beim Empfang des Eingangssignals (Sₑ) eine Markierung oder ein Etikett an einem Behälter anzubringen.

11. Produktionslinie nach einem der Ansprüche 1 bis 9, wobei die Funktionseinheit (4) eine Einheit zur Kontrolle (22) eines Behälters ist, die dazu eingerichtet ist, beim Empfang des Eingangssignals (Sₑ) mindestens einen Parameter, der sich auf den Behälter bezieht, zu erfassen.

## Claims

1. Production line (1) for producing containers by blow moulding or stretch blow moulding of preforms, the production line comprising:
- at least one transporting device (2) for transporting preforms and/or containers that is movable in a periodic movement, comprising at least one transporting element (6) able to transport a series of preforms and/or containers,
- at least one determining device (24) for determining the current position of the transporting element (6) of said transporting device (2) in the course of a period of said periodic movement, said determining device (24) generating an output signal (Sₛ) representative of said current position,
- at least one control device (26) for controlling the transporting device (2) that controls said periodic movement via a control signal (S_{c}) in accordance with said output signal (Sₛ),
- at least one functional unit (4) interacting with at least one preform and/or at least one container transported in the transporting device (2) upon reception of an input signal (Sₑ),
**characterized in that** the input signal (Sₑ) for the functional unit (4) is obtained from the output signal (Sₛ) from the position determining device (24).

2. Production line according to Claim 1, comprising a processing device (28) receiving the output signal (Sₛ) and converting said output signal (Sₛ) into said input signal (Sₑ) for the functional unit (4) .

3. Production line according to Claim 2, wherein the processing device (24) transforms the output signal (Sₛ) into a digital signal (Sₙ) that is able to be converted at least into said control signal (S_{c}) for the transporting element (6) and into said input signal (Sₑ) for the functional unit (4).

4. Production line according to Claim 2 or 3, wherein the conversion of the output signal (Sₛ) into said input signal (Sₑ) by the processing device (24) comprises the selection of a type of input signal, the selection of an input signal amplitude, and/or the selection of the resolution of the input signal.

5. Production line according to any one of Claims 1 to 4, wherein the transporting element (6) of the transporting device (2) is formed by a rotary wheel comprising a plurality of preform or container holding elements movable with the wheel (16) along a circular path, the determining device (24) being arranged to determine the current position of said holding elements on said circular path.

6. Production line according to Claim 5, wherein the determining device (24) for determining the current position is an encoder associated with a rotary shaft driving the wheel in rotation.

7. Production line according to any one of Claims 1 to 4, wherein the transporting element (6) is movable in a linear periodic movement.

8. Production line according to any one of Claims 1 to 7, wherein the transporting device (2) comprises at least one additional transporting element (6) comprising a plurality of preform or container holding elements, the functional unit (4) interacting with at least one preform and/or at least one container borne by a holding element of said additional transporting element (6).

9. Production line according to any one of Claims 1 to 7, wherein the functional unit (4) interacts with at least one preform and/or at least one container borne by a holding element of the transporting element (6), the current position of which is determined by the determining device (24).

10. Production line according to any one of Claims 1 to 9, wherein the functional unit (4) is a unit for marking or labelling a container that is arranged to apply a marking or a label to a container upon reception of the input signal (Se).

11. Production line according to any one of Claims 1 to 9, wherein the functional unit (4) is a container control unit (22) arranged to acquire at least one parameter relating to the container upon reception of the input signal (Se).
